# EUROPEAN PATENT APPLICATION

(11) **EP 4 556 709 A1**
(43) Date of publication of application: **21.05.2025**
(21) Application number: 23383181.7
(22) Date of filing: 17.11.2023
(51) Int. Cl.: F03D 7/02

(54) **WIND TURBINE AND METHODS FOR OPERATING SAID WIND TURBINE**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

Wind turbine and associated methods for setting a selected rotor configuration (10), during conditions with no yaw movement, if a determined first maximum wind condition exceeds an anticipated or current on-site wind condition and/or if said first maximum wind condition exceeds a determined second maximum wind condition, said first and second maximum wind conditions determined for at least an evaluated wind direction in respect to the wind rotor, in particular for a plurality of wind directions, and associated with a load level and/or vibration response on one or more components (2,3,4,5,6,7) at an evaluated wind condition of a plurality of evaluated wind conditions evaluated for one or more wind directions, and determined based on an allowable threshold, such that the first maximum wind condition associated with the selected rotor configuration may exceed currently safety wind conditions required for performing assembly or maintenance operations thus increasing the availability thereof.

## Description

### FIELD OF THE INVENTION

The present invention pertains to the field of wind energy generation, specifically to wind turbines and methods for safeguarding personnel health and safety, and the structural and operational longevity of such wind turbines during standstill conditions when confronted with fluctuating wind at varying wind directions under a time domain where a yaw movement may not be desired or possible.

More specifically, the invention relates to a wind turbine and associated methods that find particular use on enabling maintenance and installation operations to be conducted at higher wind conditions than typically permissible for safety reasons. Consequently, this may lead to enhanced safety and improved availability for performing wind turbine construction and service operations, therefore, reducing wind turbine assembly times and downtimes.

### BACKGROUND OF THE INVENTION

In the field of wind energy, wind turbines represent a fundamental technology for harnessing sustainable energy from the wind. As these turbines grow in size and capacity, their assembly and maintenance become increasingly intricate tasks. Several methodologies and configurations have been applied to ensure safe and efficient maintenance of these structures.

Known wind turbines, when operated at standstill modes, for example, during maintenance or installation operations, set the rotor blades at a fully feathered position. In this configuration, all the rotor blades are oriented, or 'feathered', parallel to the airflow to minimize loads. Additionally, the nacelle, which houses the generating components, may be yawed by 90° to the wind, to mitigate the wind's influence. Additionally, a mechanical braking mechanism may be applied.

Even in case these measures are taken, there still exists the problem of loads increments and/or appearance of vibrations, which may negatively affect health and safety of personnel operating the wind turbine and increase solicitations in some of the wind turbine components and may thus put its structural integrity in danger.

In addition, such a strategy requires a working yaw system, which may not be available or desired for various reasons, particularly during specific operations, such as maintenance or installation procedures.

Hence, it is a problem in the prior art, that during standstill conditions, for a given time domain, a yaw movement may not be possible or desired, and the wind turbine with the full feathered configuration and even initially rotated 90° against the wind, starts experiencing significant loads increases and/or vibrations which either does not allow construction or service operations or induce important uncontrolled vibrations which may damage or reduce some of the component's life. Furthermore, these conditions aggravate the aeroelastic instabilities in the wind turbine. Aeroelasticity refers to the interaction between aerodynamic forces and the elastic behavior of structures. In the context of wind turbines, these instabilities can lead to destructive oscillations, jeopardizing the structural integrity of the turbine.

As the wind direction changes, and the nacelle cannot rotate, namely, to exert a yaw movement for any given operational or strategical reason, a misalignment is developed, which, combined with all the rotor's blade at fully feathered position, exposes the wind turbine to several detrimental factors. Among them, the turbine experiences potential loads increments and appearance of vibrations. These loads increments and/or vibrations, which arise due to wind flow, which may include turbulent flow and/or other conditions as density, upflow and shear, among other, around the misaligned, feathered blades, lead to heightened mechanical loads on the turbine structure, particularly on its tower, blades, and nacelle components. As a result, some of these components undergo high undesired loads and/or accelerations, which may increase beyond its designed tolerance levels or beyond safety limits to perform construction or service operations. Under this scenario no maintenance or installation operations can be performed under safe conditions, even when the wind is flowing at relatively low or moderate conditions.

Due to these challenges and the potential for damaging the turbine, service and construction teams are typically restricted to perform maintenance or installation tasks only under very low wind conditions thresholds. This considerably limits the operational window for maintenance, leading to inefficiencies and potential downtimes.

In summary, the conventional practice of setting the turbine blades to full feather during standstill, while initially considered a safe mode, brings about several operational and structural challenges. These challenges not only limit the efficiency of maintenance operations but also risk the longevity and structural integrity of the wind turbines.

Thus, there exists an urgent need to provide a solution which increases the operational windows for maintenance and installation procedures under safe conditions. There is also a need to provide a solution which decreases the vibrations even when no assembly or service operations are intended, but the yaw system cannot be used or is not desired to be used for any operational or strategic reason, for example, to not cause an unnecessary wear on the yaw system components if it is not necessary.

The aim of the invention is therefore to provide a wind turbine and associated methods for the operation of said wind turbine, which solves at least one of the aforementioned problems.

### SUMMARY OF THE INVENTION

The object of the invention is achieved by the independent claims. The dependent claims describe advantageous developments and modifications of the invention.

In accordance with a first aspect of the invention it is provided a method for setting a wind turbine under standstill conditions, the method comprising the following steps:
setting one selected rotor configuration selected from one or more selected rotor configurations, if
a first maximum wind condition obtained or retrieved, for the one or more selected rotor configurations, for at least an evaluated wind direction in respect to the wind rotor, said first maximum wind condition associated with at least a load limit and/or a vibration response on one or more components of the wind turbine for a wind condition of a plurality of evaluated wind conditions evaluated in the at least an evaluated wind direction, exceeds an anticipated or current on-site wind condition; and/or
the first maximum wind condition exceeds a second maximum wind condition, said second maximum wind condition obtained or retrieved, in particular if required, for a different rotor configuration other than the one or more selected rotor configurations and associated with a load level and/or a vibration response on one or more components for an evaluated wind condition of the plurality of evaluated wind conditions evaluated in the at least the evaluated wind direction.

Nota that, the above mentioned "in particular if required" is intended to mean that depending on the "and/or" condition, this second maximum wind condition may or may not necessary be retrieved or obtained by the method. For example, for an "or" condition, if the first maximum wind condition exceeds an anticipated or current on-site wind condition, and if only the first condition is to be evaluated by the method, no further steps may be necessary as the second "if" condition might not be executed, thus, this value may be obtained, retrieved, or determined, depending on the chosen method logical step/s.

The word obtaining, within the meaning of the invention, encompasses receiving, retrieving, or determining.

It has been found that, some rotor configurations give less loading and/or better vibration damping results for varying wind conditions under given directions, than conventionally known rotor configurations usually used under standstill conditions. Rotor configurations within the meaning of the invention, address the pitch angles or pitch positions of the blades, and may further include the rotor azimuthal position based on the relative height position of one pitched blade.

In particular, it has been found that one or more selected rotor configurations give better results than known configurations under standstill conditions comprising all the blades at feather or parked positions. Therefore, in some embodiments, the different rotor configurations may be rotor configurations wherein all the blades are positioned at a substantially feathered pitch positions, in particular wherein all the rotor blades have a pitch angle equal 90° or -90° or is close to 90° or -90°, in particular within a range of 75° to 105° or -105° to - 75°.

In some embodiments, the one or more selected rotor configurations is any rotor configurations other than the different rotor configurations as outlined above.

In some embodiments, the one or more rotor configurations may involve a rotor configuration comprising a first blade pitched at a pitch angle close to 0°, in particular within +35 and -35°, wherein said blade is the blade most exposed to the wind, being, for example, the uppermost blade, whereas the one or more further blades differ in pitch angle by at least 45°. The first blade may be the uppermost either by its azimuthal position, namely, being the one at the uppermost or, if positioned at a substantial same height to one of the further blades, it is the most exposed to the wind as it is the blade pitched at a pitch angle close to 0°. For example, for a three-bladed rotor, the azimuthal position of the first blade may be set between +60° to -60° from the vertical axis. In a two-bladed rotor, the pitched blade may be always the uppermost and/or the most exposed to the wind, namely, on the upper half of the rotational plane or in horizontal position of both blades, the first blade is the one most exposed to the wind as said first blade is pitched close to 0°.

It has been found that, setting one of one of the one or more selected rotor configurations, according to anyone of the embodiments above, provide good damping results and lower loads, and therefore may provide a higher maximum wind condition for a given wind direction than other conventionally utilized options. For example, a maximum wind condition may be a maximum wind condition which accounts for loads and/or vibrations under a maximum allowable load level and/or a vibration threshold on one or more components, and this maximum wind condition has been found to be, under certain conditions, higher than a homologous maximum wind condition calculated for a fully feathered/parked wind rotor blades at the given wind direction.

Thus, the safety wind condition threshold, for example a maximum wind speed for performing a service or assembly operations at a given direction, may increase to a higher wind speed for said direction, than the safety wind speed threshold currently required for safety of assembly or maintenance operations.

In addition, the method allows to determine, obtain, or retrieve the maximum wind conditions for which the service or construction personnel may be allowed to perform operations under safe conditions. Service or constructions teams may need be given or retrieve specific parameters and instructions as to when, depending on the on-site wind conditions and/or on-site wind direction, to set the specific one or more rotor configurations which have proven to give good damping and/or lower loading results.

Therefore, some steps of the method may allow to obtain the certain first maximum condition, for example a wind speed, and, further, check if a wind speed anticipated or measured on-site would allow personnel to perform their activities if they set the selected rotor configuration on-site. I.e., if they set the one selected rotor, they may be allowed to do operations at a higher wind speed.

In addition, some steps allow to check or confirm if said first maximum wind condition associated with a selected rotor configuration would be an improvement, or not, as compared to other rotor configurations, for example, rotor configurations conventionally utilized during standstill conditions. Thus, the method may allow to set the selected rotor configuration only if said rotor condition gives better results for the on-site wind conditions (and direction) than other rotor configurations .

Furthermore, the method may allow to confirm or check if vibrations and/or loads would be prevented with the selected rotor configuration when compared to other conventionally utilized rotor configurations during standstill condition. Hence, not setting the selected rotor configuration if other different rotors configurations are more adequate at the given context (wind condition and/or wind direction),

The method may further allow to both check or confirm if the selected rotor configuration provides the safety conditions required when compared to on-site anticipated or current conditions, and, even if conditions are not satisfied, and thus no service or assembly may be performed safely, it allows to check or confirm if the selected rotor configuration may still provide a vibration damping and/or lowered loading when compared with other conventionally utilized rotor configurations for standstill condition, thus further setting the selected rotor configuration for preventing loads and vibrations which may cause loads exceedances and/or fatigue damage to components, especially if no yaw movement is able or intended to be executed and hence there may be no other options to reduce loads and/or vibrations.

Please note, a further advantage of the invention is that, the service or assembly team should ideally obtain or retrieve a register or precise instructions, as to when to set the one or more selected rotor configurations, and, further, which of the one or more selected rotor configuration would be the more suitable based on the anticipated or actual wind condition or wind direction on-site.

In some embodiments, the on-site wind direction may be obtained or measured, and thus compared with the evaluated wind directions used for determining the first maximum wind condition such that the on-site wind direction matches the evaluated wind direction. The first maximum wind conditions may correspond to the wind condition at the selected evaluated wind direction which is associated to a maximum or allowable safety limit or threshold if the selected rotor configuration is set. Then, said first maximum wind condition may be compared with the on-site current or anticipated wind condition and/or with the second maximum wind condition. Thus, the aforementioned advantages may be achieved. In particular, some embodiments may be even more advantageous if a plurality of first maximum wind conditions are determined or obtained, each associated with corresponding wind direction. Then, a first maximum wind condition is easily obtained comparing with the wind direction on-site and thus obtaining the first maximum wind direction which is that associated with the wind direction on-site. This embodiment may be particularly useful for situations wherein direction-varying wind flow might not be expected during construction or service operations, or at least not expected to vary significantly. The at least wind direction evaluated may be the prevailing on-site wind direction, presenting the most common wind direction of the site whereat the wind turbine or wind park is mounted.

In some embodiments, the first and second maximum wind condition are obtained or retrieved, for/across an entire range of a plurality of evaluated wind directions in respect to the wind rotor, each of said maximum wind conditions associated with a load level and/or a vibration response on one or more components of the wind turbine for an evaluated wind condition of the plurality of evaluated wind conditions evaluated within said range, the first maximum wind condition being associated with the selected rotor configuration and the second maximum wind condition associated with the different rotor configuration. Note that, the second maximum wind condition may only be obtained if required by the logical steps of the method.

The invention has further found that, some rotor configurations give better damping results and/or load level, for varying wind conditions under varying wind direction, namely, for an entire one or more ranges of wind directions, than conventionally known rotor configurations usually used under standstill conditions if confronted or evaluated within the same one or more ranges of wind direction. This provides better results for different deviations of varying wind directions under subsequent time domains allocated for service or construction. I.e., resulting in an improved behavior even when confronted with varying wind flows at different directions which vary during a certain time domain, in particular when the wind turbine is devoid of a yaw movement to adapt to such varying wind during said time domain.

This condition may become even more critical, the wider the range of the wind directions which is to be allowed without a yawing movement.

In other words, an equivalent conventional fully feather rotor may only be safe for a narrow range of wind directions and/or if a wider range is allowed, it may only be safe for a very low wind condition, before it would start to be unsafe for personnel within the turbine and/or for the components of the wind turbine if not properly yawed for adapting to wind direction changes. Consequently, the construction and service procedures may be only possible at very low conditions which ensure that even if the wind direction change, it would still be within a safety limit.

This means that, for example, if an on-site wind speed is below the obtained maximum wind speed for an allowable or expected range of wind directions, construction and service operations may be performed safely. Of course, this may increase the operational windows for maintenance and installation procedures under safe conditions. Note that, consequently, availability factors of the wind turbines may significantly increase, because downtimes due to waiting times could be greatly reduced.

The on-site wind condition, within the meaning of the invention, is for example a measured on-site wind condition or is for example an expected maximum on-site wind condition during a time domain. The expected or anticipated maximum on-site wind condition be established based on the measured on-site wind condition adding or multiplying a security factor, which may be based on historical data or probabilistic data, or both. The time domain may be based on the time expected for the assembly or maintenance operations to be fully executed.

In some embodiments, the range of wind directions may be the allowable range of wind directions depending on an expected wind direction variability or may be a safety range limit imposed or predefined for security reasons. Hence, the allowable range of wind directions may be obtained based on historical data and/or probability functions.

For example, a plurality of prevailing wind directions may define one or more prevailing ranges of varying wind direction, defined by the endpoints of the wind directions within the range. In some embodiments, the one or more ranges could also be predefined according to the wind turbine class linked to mean wind speeds, reference wind speed, turbulence intensity, density, upflow, shear and other site conditions, expected for that wind turbine.

In addition to or as an alternative to the above, the allowable range may be based on the worst probabilistic or real wind direction changing maximums on the site considering a safety number of years, for example, 50 or 100 years. The allowable range may be compared to a set of ranges stored and obtained, each associated with a maximum wind condition for one or more selected rotor configurations.

In some embodiments, the one or more selected rotor configurations, comprises any combination within the following azimuthal and pitching parameters, namely, wherein a first rotor blade is set to have a pitch angle close to 0°, in particular within -35° and 35°, or within -15° and 15°, and the one or more further blades are each set to a pitch angle differing by at least 30° from the first rotor blade, in particular differing by at least 45° or 60° and/or wherein the further blades are set to a pitch angle equal to 90° or -90° or is close to 90° or -90°, in particular within a range of 75° to 105° or -105° to -75°. In addition, optionally, the one or more selected rotor configuration may further comprise a rotor configuration wherein the azimuthal position of the first rotor blade is set such that said first rotor blade is the uppermost rotor blade of the rotor or, in a three-bladed rotor, when the condition occurs that two upper rotor blades are at substantially the same height, in a so-called bunny configuration or "Y" shaped, either one of said two upper rotor blades is set as the first rotor blade.

For example, in a three-bladed rotor the first blade may be positioned at any azimuthal position between +60 or -60° from the vertical axis, wherein the further blades may have a pitch angle differing by at least 30° or -30, in particular differing by +60° or -60° from the first pitched rotor blade.

According to the present invention, the mentioned ranges and other possible ranges mentioned throughout the document include their endpoints. For example, an angle within -60° and +60°, includes the values of -60° and 60°, as well as the potential margin of error that may exist by experimental or instruments tolerance.

In some embodiments, the method may further comprise:
obtaining an on-site wind condition,
comparing the on-site wind condition with the first maximum wind condition, setting the selected rotor configuration based on the result of the comparison.

In addition to or as an alternative to the above, the method may further comprise:
obtaining an on-site wind condition and an on-site wind direction,
obtaining an expected or safety range of wind directions on a subsequent time domain, in particular said time domain associated with the time for a construction or service operation on the wind turbine,
comparing the expected wind directions range to a stored range of wind directions associated to the first maximum wind condition obtained for said stored range,
comparing the on-site measured wind condition with the first maximum wind condition associated with the stored range,
set the selected rotor configuration based on the results of the comparisons.

In some embodiments, the wind condition comprises a wind speed which may be associated to a turbulence parameter and/or other conditions as density, upflow and shear, among other.

Therefore, each wind conditions may be a value of a wind speed linked to a value of a turbulence intensity and/or other conditions as density, upflow and shear, among other, each set of parameters conforming a wind condition. Alternatively, a wind condition may be a wind speed value. Alternatively, a wind condition may be a wind value associated with a turbulence intensity, wherein the pair define a wind condition.

In addition, equivalently, the first and second maximum wind condition may comprise a wind speed, which, for example, may be further associated with a turbulence parameter and/or other conditions as density, upflow and shear, among others, which resulted in the associated load level and/or vibration selected based on an allowable threshold.

In some embodiments, the allowable threshold may comprise a maximum allowable load level and/or allowable vibration response, or a weighted value of both. The evaluated wind condition of a plurality of wind conditions evaluated within a range and/or at a specific wind direction, which resulted with the vibration response and/or load levels under but nearest the allowable threshold, may be the evaluated wind condition associated with the first or second maximum wind condition.

In accordance with a second aspect of the invention, it is provided a wind turbine, comprising at least two rotor blades, said blades attached to a hub, forming a wind rotor mounted to a nacelle which is in turn mounted on a tower, further comprising an electrical generator operationally connected to the wind rotor for converting wind energy into electrical energy, wherein the wind turbine further comprises a control module configured to:
Obtain or retrieve, for a selected rotor configuration, a first maximum wind condition which is based on an evaluated wind condition determined across an entire range of wind directions in respect to the rotor, said evaluated wind condition associated with a load level and/or vibration response on one or more components of the wind turbine at different wind conditions within said range,
send instructions for setting one selected rotor configuration of the one or more selected rotor configurations, if the first maximum wind condition is above an on-site wind condition and/or if said first maximum wind condition is above a second maximum wind condition associated to one or more other rotor configurations different than the one or more selected rotor configuration.

In some embodiments, the one or more selected rotor configurations may be any rotor configuration within the boundaries as stated for the first aspect of the invention.

The advantages of the wind turbine largely correspond to the above-mentioned advantages of the method. In particular, the invention has found that, some rotor configurations give lower loading and/or better damping results for varying wind conditions at a given wind direction in respect of the rotor, and further varying wind directions varying during a time domain, than conventionally known rotor configurations confronted with these situations.

Note that, ranges may be determined by the chosen endpoints of the wind directions evaluated.

Therefore, a wind turbine with a control system configured to determine or retrieve from stored data, the first maximum wind and, optionally, the second maximum wind condition, and to perform the duly comparisons with actual or anticipated on-site wind condition data, may further send instruction to set the selected configuration if the conditions are satisfied, therefore allowing construction and service operations to be performed safely without a yawing system and/or reducing the loading and/or vibration on main components if a yawing movement is not conducted and/or avoid doing an unnecessary yaw movement. Of course, this may increase the operational windows for maintenance and installation procedures under safe conditions.

In addition, the service or construction team may get, by looking up in tables, tabulated data, or equivalent means, such as data stored on a tablet or an electronic device, the determined first maximum wind condition for an associated range and the corresponding most favorable rotor configuration out of the one or more selected configurations. Hence, they may input the values on a control unit, which can be external or implemented on the main control system of the wind turbine, and the control unit may receive and send the instructions to the corresponding actuators to set one selected rotor configuration. In some embodiments, the control unit may be inputted the first (or second) maximum wind condition and it may determine the most favorable wind rotor configuration within the one or more selected wind turbine configurations which are stored.

In some embodiments, the user/personnel can introduce this most favorable configuration based on the first maximum wind condition associated to an expected or safety range, all of these looked up in tables, tabulated data or stored on an electronic device, preferably with a software or an application specifically design to store the first maximum wind condition for given ranges for one or more selected configurations.

In some embodiments, the control unit may be inputted the allowable range or the anticipated wind condition, and the control unit may determine the most favorable wind rotor configuration within the one or more selected wind turbine configurations. Alternatively, the selected most favorable selected rotor configuration for a given range or wind direction may be stored on the tables, tabulated data, or stored on an electronic device.

In some embodiments, in instances where the control unit is not available, such as during some construction and/or maintenance activities, or when the turbine is disconnected from the grid, manual intervention is permissible. In these circumstances, the service or construction team may need to manually set the rotor configuration using known mechanical tools based on the first maximum wind condition and/or the second maximum wind condition, which may be pre-calculated, tabulated or gathered by equivalent means, such as data stored on a portable electronic device. This manual setting process allows for the rotor configuration condition be adjusted to a safe and effective state that corresponds to the maximum wind condition associated with an expected or safety range, as determined by the aforementioned data sources, when the control system is not available.

Therefore, the wind turbine as aforementioned, may comprise pitch adjustable units and a rotational mechanism which allows the rotation of the rotor, each able to be actuated or adjusted manually by the personnel, in particular using external mechanical tools known in the field of service and assembly of wind turbines, wherein the wind rotor is configured to be set to one selected rotor configuration of the one or more selected rotor configurations, by actuating or adjusting said pitch positioning units and/or the rotational mechanism, if a first maximum wind condition is above an on-site wind condition and/or if said first maximum wind condition is above a second maximum wind condition associated to a different rotor configuration other than the one or more selected rotor configurations .

Mechanical tools known in the field, may be an arrangement for setting a selected rotor comprising a manual pitch adjustment kit comprising, inter alia, anyone of the following: wrenches, spanners, lifting equipment, alignment equipment, drills, jacks, gauges, pliers, pulleys, calipers, manual pitch-setting tools specifically designed for blade specific pitching mechanism, etc. Note that, some turbine pitching mechanism are specifically designed to be actuated by specific designed tools for said pitching mechanism.

Therefore, in some embodiments, the setting of the selected rotor configuration is not performed automatically by a control unit, it may be performed manually by the service or assembly personnel.

The first and second maximum wind condition may be understood to be equivalent as defined for any of the embodiments of the first aspect of the invention.

More specifically, all the embodiments of the method described for the first aspect of the invention are intended to be directly compatible and workable with the wind turbine according to the second aspect of the invention. It is intended that the method can be applied to, integrated with, or utilized in conjunction with the wind turbine, in particular integrated with the control system, to achieve the desired results and improvements.

In a third aspect of the invention, it is provided a wind farm comprising a plurality of wind turbines according to the second aspect of the invention.

In a fourth aspect of the invention, it is provided a computer implemented method, comprising:
obtaining from computer-aided simulations or retrieving from on-site measurements, a set of data associated with a load level and/or vibration response at one or more components of the wind turbine, said set of data obtained for a plurality of evaluated wind conditions for at least an evaluated wind direction for one or more selected rotor configurations,
determining, based on the obtained data, a first maximum wind condition comprising the evaluated wind condition associated to an allowable loading and/or a vibration response threshold on one or more components of the wind turbine for at least the evaluated wind direction.

The one or more selected rotor configurations may be anyone of the selected configurations as stated for the first aspect of the invention.

Note that, an equivalent embodiment according to the present invention, is that the method receives real load level and/or vibration response measured data at different evaluated wind conditions for each evaluated wind direction. Therefore, the computer implemented method could receive said real measured data and establish, or determine, based on the set of data gathered and received, a first maximum wind condition, for example being the maximum wind condition across the entire range of evaluated wind directions or for each evaluated wind direction, in particular said first maximum wind condition associated with a load level and/or vibration response from one or more components based at least in part on an allowable threshold of load level and/or vibration response. Thus, only the determining step would be required to be determined by computer means and based on real measured data.

In some embodiments, the method may further comprise storing, different wind directions ranges, each range associated with a corresponding maximum wind condition determined, resulting in a plurality of first maximum wind conditions, each associated with a range.

These stored ranges may be compared against an allowable range of wind directions depending on an expected wind direction variability or may be compared against a safety range limit imposed or predefined for security reasons. For comparing, the endpoints of the allowable range and the stored range must be substantially the same or differing by an allowable threshold.

Further combinations with other aspect of the invention can be easily foreseeing by the reader.

In some embodiments, the computer implemented method further comprises:
obtaining from computer-aided simulations or retrieving from on-site measurements, a set of data associated with a loading level and/or a vibration response at one or more components of the wind turbine, said set of data obtained for a plurality of evaluated wind conditions for at least a wind direction for a different rotor configuration other than the one or more selected rotor configurations (10),
determining, based on the obtained data, a second maximum wind condition comprising the maximum wind condition associated to an allowable loading and/or a vibration response threshold on one or more components of the wind turbine.

In some embodiments, the computer implemented method further comprises:
repeating previous steps for a plurality of rotor configurations selected from the one or more selected rotor configurations,
storing for each selected rotor configuration, the data collected associated with a first maximum wind condition at a range of wind directions.

The ultimate selected one rotor configuration for each range evaluated, may be that which results in the absolute higher maximum wind condition of the set of maximum wind conditions evaluated within the range out of all the one or more rotor configurations evaluated within that range. This further increases the safety window for maintenance, service, or other operations as the absolute determined first maximum wind condition may increase to a higher threshold. This may also reduce load level and/or vibrations even if operations are not required in the wind turbine and/or reduces the need to yaw the wind turbine. In other word, the absolute best performing wind rotor configuration may be selected for each range, which may be the expected on-site range of wind direction deviation, which could further increase the maximum wind condition allowable, thus enabling greater windows for performing service.

A yet further aspect of the invention provides a non-transitory computer-readable storage medium storing instructions that, when executed by one or more processors, cause the processors to perform the operations of the computer implemented method according to anyone of the above-described embodiments.

A yet further aspect of the invention provides a non-transitory computer-readable storage medium, configured to store one or more ranges of the aforementioned ranges and/or a set of first maximum wind speeds, each associated with a wind direction as aforementioned.

Each one or more ranges may be stored with an associated first maximum wind condition for one or more selected rotors configurations, according to anyone of the embodiments forecited. In particular, further storing the second maximum wind condition which may be determined as aforementioned.

In some embodiments, said storage medium is further configured to store a most favorable rotor configuration of the one or more selected rotor configurations, selected for each range and/or for each wind direction, which in particular is associated to the higher first maximum wind condition determined out of all of the one or more rotor configurations.

The advantageous features of the method for operating a wind turbine control system, associated methods and the computer implemented method can generally be combined.

### BRIEF DESCRIPTION OF THE DRAWINGS

Embodiments of the invention are now described, by way of example only, with reference to the accompanying drawings, of which:
Figure 1 shows a schematic front view of a wind turbine under standstill conditions in a parked position with a rotor configuration determined by a control system of the wind turbine, according to an exemplary embodiment of the invention.
Figure 2 shows a flowchart illustrating an example of a method for operating a wind turbine.
Figures 3 shows a flowchart illustrating an example of a method for determining a maximum wind condition for one or more selected rotor configurations.

### DESCRIPTION OF THE DRAWINGS

The illustration in the drawings is in schematic form. It is noted that in different figures, similar or identical elements may be provided with the same reference signs.

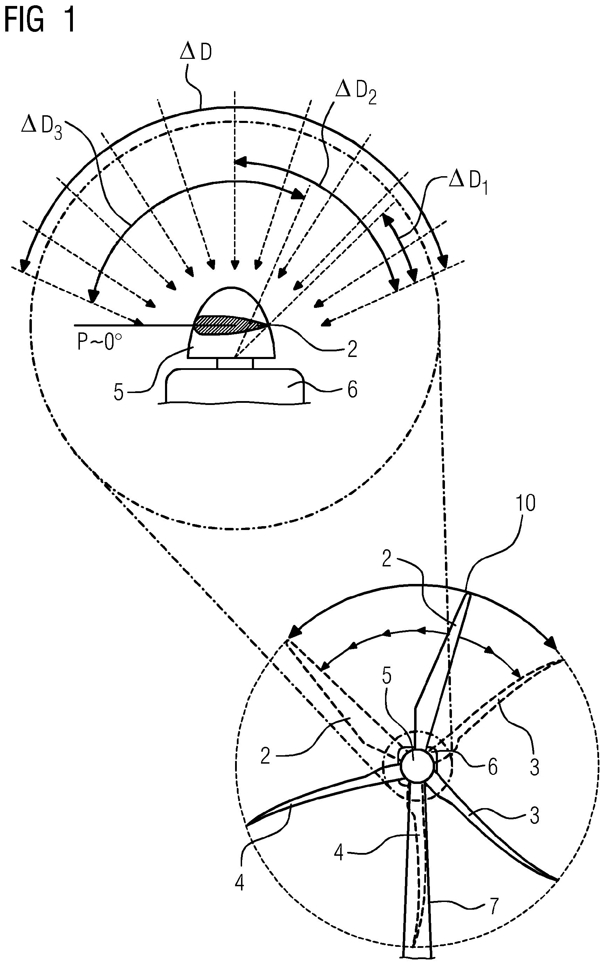

Figure 1 shows a wind turbine (1) under standstill conditions and in a parked position with one of the one or more selected rotor configuration (10) according to an exemplary embodiment of the present invention. The rotor configuration comprises a first blade (2) pitched at a pitch angle (P) close to 0°, azimuthally located at the uppermost, whereas the remaining blades (3,4) are pitched at a substantially feathered or parked position, with a pitch angle (P) close to 0°.

The wind turbine (1) comprises three rotor blades (2, 3 and 4) attached to a hub (5) forming a wind rotor mounted to a nacelle (6) and a tower (7). The nacelle (6) is mounted on top of tower (7). Typically, the nacelle (6) can be rotated about a vertical axis of tower (7) to enable yawing of the wind turbine, so that the wind rotor may be aligned with the wind direction. However, during standstill conditions as illustrated in Figure 1, said yaw movement is not intended or possible according to an embodiment of the present invention.

In this particular example, the wind turbine (1) is a horizontal axis wind turbine. Furthermore, the wind turbine (1) can be of the fixed or floating type.

Integrated in the wind turbine (1), for instance in the nacelle (6), is a control system which controls various operational parameters, including the pitching angle (P) of each rotor blade (2,3,4) and further capable of controlling, by means of actuators, the azimuthal position of the rotor blades during or before a parked position of the wind turbine (1) as represented in Figure 1. Once in the selected rotor configuration (10) the mechanical brakes may be applied.

In particular, the invention has recognized that, some rotor configurations give better load level and/or damping results for varying wind conditions, and further for wider ranges of wind directions, than conventionally known rotor configurations. Rotor configurations within the meaning of the invention, refer to the pitch angles or pitch positions of the blades, and may further include the azimuthal position based on the relative height of a pitched blade.

Therefore, in a preferred embodiment of the invitation, setting one of these one or more selected rotor configurations (10) as illustrated in Figure 1, such as the selected rotor configuration (10) of said Figure 1, give a higher maximum wind condition for a given wind direction range than other conventional utilized options.

In the preferred embodiment as illustrated in Figure 1, during standstill conditions, the wind turbine is not intended or capable of performing a yaw movement, for example, because of construction or service operations to be conducted, and varying wind directions may be expected. Therefore, the control system of the wind turbine, comprises a control system which:
obtains or retrieves, for one or more selected rotor configuration (10), a first maximum wind condition which is based on a maximum wind condition determined across an entire range (ΔD) of wind directions in respect to the rotor, said maximum wind condition associated with a load level and/or vibration response on one or more components of the wind turbine at different wind conditions within said range, and
send or receive instructions, for setting the one selected rotor configure-ration (10) from the one or more selected rotor configurations (10), for example the selected rotor configuration of Figure 1, if the first maximum wind condition is above an on-site wind condition and/or if said first maximum wind condition is above a second maximum wind condition associated to a different rotor configuration other than the selected one or more rotor configuration.

The different rotor configurations may be the rotor configuration on site, or a predefined typical configuration with all the blades at a parked or feather position.

According to the invention, a maximum wind condition may be a maximum wind speed which accounts for a loading and/or a vibration response on one or more components substantially accounting for a maximum allowable load level and/or vibration threshold. Hence, said maximum wind speed, in some contexts, has been found to be higher than a homologous maximum wind speed calculated for a fully feathered wind rotor at some ranges of wind directions, this is, for different deviations of varying wind directions. I.e., resulting in an improved behavior under varying wind, without a yaw movement to adapt to such varying wind.

In addition, for a given single wind direction, the first maximum wind condition, for example a first maximum wind speed, has also been found, in some operational contexts, to be higher than homologous maximum wind speed calculated for a fully feathered wind rotor at said wind speed. Hence, for example, if not significant variation is expected, the determined first maximum wind condition may be taken for a single wind direction coinciding with the on-site wind direction.

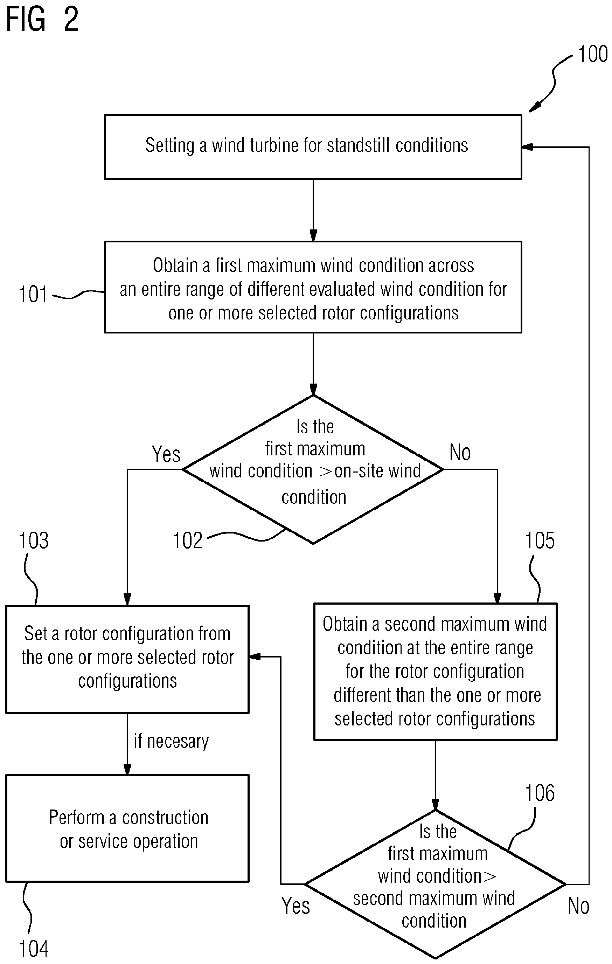

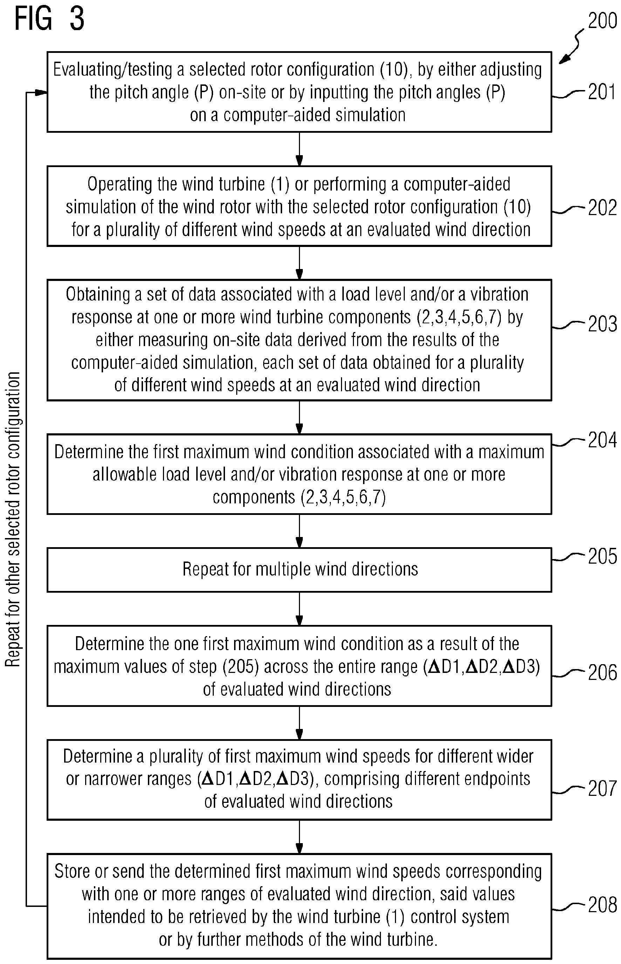

Figure 2 illustrates a method (100) for performing the steps of the control system of the wind turbine (1), and Figure 3 illustrates a preferred method (200) for determining the first maximum wind condition for one or more selected rotor configurations (10). The second maximum wind condition can be obtained by changing the selected configuration at step (201) and repeating subsequent steps (202,203,204,205,205,206,207,208) with said different wind rotor configuration, for example, with all the blades (2,3,4) of the rotor at a feathered or parked position.

The selected rotor configuration (10) is intended to prevent loads exceedances and/or vibrations for a range (ΔD) of wind directions which are expected to vary while the wind turbine does not perform a yaw movement. More specifically, the invention has recognized that damping under standstill conditions is increased and/or loads reduced for a range (ΔD) of wind direction under selected rotor configuration (10), said one or more selected rotor configuration (10) being selected in such a way that the pitch angle (P) of a first rotor blade (2) differs significantly from the pitch angles of the other rotor blade or blades (3,4). This difference should be at least 30°, where a difference of 45° or 60° would lead to even better results.

In addition, the selected rotor configurations (10) comprise a first rotor blade (2) with a pitch angle differing significantly from the pitch angles of the other rotor blades (3) and (4) should preferably be in a position of maximum wind exposure, i.e., with a pitch angle P = 0° or close to 0°, where a range -15° ≤ P ≤ +15° would still lead to the desired result.

The first rotor blade (2) with the pitch angle differing significantly from the pitch angles of the other rotor blades (3) and (4) should preferably be the uppermost blade (2) of the wind rotor, as also illustrated in Figure 1, since this would usually be the position of maximum wind exposure, or, in the specific scenario when two upper rotor blades (2,3,4) are substantially leveled in height with each other, defining a 'Y' shape or so-called bunny configuration, setting either one of said two upper rotor blades (2,3,4) as the first rotor blade (2), so that one of the upper blades (2,3,4) is set to a pitch close to 0°. The other rotor blades (3) and (4) should preferably be in or close to the parked or feathered position as shown in Figure 1. Pitch angles of rotor blades (3) and (4) would thus be P = 90° or P = -90°, or close to 90° or -90°, where a range 75° ≤ P ≤ 105° or -105° ≤ P ≤ -75° would still lead to the desired result.

Hence, the control system of the wind turbine may send instructions to corresponding actuators to set one selected rotor configuration within the aforementioned boundaries, if the stated conditions of step (102) and/or step (105) are fulfilled. This is particularly relevant when the wind turbine is connected to the grid and all systems, including control, sensor, and actuation systems, are fully operational.

Alternative or in addition to the above, the service or construction team may utilize pre-calculated, tabulated data or equivalent data means, such as data stored on a tablet or an electronic device, for obtaining the first maximum wind condition, to check if the stated conditions of step (102) and/or step (105) are fulfilled. Hence, the user may input the values on a control unit, which can be external or implemented on the main control system of the wind turbine, and the control unit may receive and send the instructions to the corresponding actuators to set the one selected rotor configuration.

It is also important to note that in certain situations, such as during construction, maintenance with the machine disconnected from the grid, etc., the control systems, sensors, and actuators may not be available. In these scenarios, manual intervention may be necessary. The rotor configuration, namely, pitch position and azimuthal position, may need to be manually adjusted by personnel on the machine using known mechanical tools for manipulating the rotor blades. Additionally, internal or external storage or power generation systems may be used to power the necessary sensors and actuators. Tentatively, and not necessarily, the main or an alternative control of the wind turbine can be employed, allowing for manual, semi-automatic, or automatic operations. This ensures that even when disconnected from the grid, the wind turbine can be set to a safe and effective configuration based on the first maximum wind condition associated with an expected or safety range, all of which can be determined by looking up in tables, tabulated data or stored on an electronic device, preferably with software or an application specifically designed with the first maximum wind condition for given ranges for one or more selected configurations.

The preferred way of carrying out the above-mentioned steps, preferably, if available, by the control system of the wind turbine (10), will be explained in greater detail next, with the aid of Figures 2 and Figure 3 flowcharts.

As will be appreciated, some embodiments of the present invention may be embodied as a method, system, or computer program product. Accordingly, the present invention may take the form of an entirely hardware embodiment, an entirely software embodiment (including firmware, resident software, micro-code, etc.) or an embodiment combining software and hardware aspects all generally referred to herein as a "circuit", "module," or "system". Furthermore, the present invention may take the form of a computer program product on a computer-usable storage medium having computer-usable program code embodied in the medium. As used herein, the terms "software" or "firmware" are interchangeable and include any computer program stored in memory for execution by a processor, including RAM memory, ROM memory, EPROM memory, EEPROM memory, and non-volatile RAM (NVRAM) memory. The above memory types are exemplary only and are thus not limiting as to the types of memory usable for storage of a computer program.

Any suitable computer readable medium may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device.

Computer program code for carrying out operations of the present invention may be written in an object-oriented programming language such as Java7, Smalltalk or C++, or the like. However, the computer program code for carrying out operations of the present invention may also be written in conventional procedural programming languages, such as the "C" programming language, or a similar language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Figure 2 shows a flowchart illustrating an example of a method (100) for operating a wind turbine during standstill conditions. The method (100) may be a computer implemented method. The control system of the wind turbine (1) of Figure 1 may preferably be configured to execute the steps and conditions as set out in the method (100) of Figure 2.

At step (101), the method (100) comprises obtaining for at least a selected rotor configuration (10), a first maximum wind condition determined across an entire range (ΔD) of wind directions in respect to the wind rotor, said first maximum wind condition associated with one or more load levels and/or vibration responses on one or more components of the wind turbine (1) for a evaluated wind condition evaluated within the range (ΔD).

According to a preferred embodiment, the one selected rotor configuration (10) is selected from the one or more rotor configurations aforementioned wherein the pitch angle (P) of a first rotor blade (2)is set to a pitch angle (P) close to 0°, and the further blades (3,4) are set to a pitch angle close to 90°, wherein the first rotor blade (2) is the uppermost rotor blade of the rotor or, in a three-bladed rotor, when two upper rotor blades (2,3,4) are level with each other, defining a 'Y' shape, setting either one of said two upper rotor blades (2,3,4) as the first rotor blade (2), so that one of the upper blades (2,3,4) is set to a pitch angle (P) close to 0° and the two further blades (3,4) are set to a feather position close to 90°.

The word obtaining, within the meaning of the invention, encompasses receiving, retrieving, or determining such wind condition in step (101).

The preferred steps to obtain said first maximum wind condition as outlined in step (101), are explained in detailed in the method for determining a maximum wind condition (200) of Figure 2. More in particular, the method (100) may execute all the steps of method (200) or may retrieve or receive the data from the stored values of step (208).

Referring now to Figure 2, for explaining in further detailed a preferred way to carry out step (102), in step (201) a rotor configuration is selected from anyone of the rotor configurations (10) within the boundaries mentioned above. All these rotor configurations (10) have provided good loads reductions and/or damping results. Said step (102) may either be performed by adjusting the pitch on-site or by inputting the pitch angles on a computer-aided simulation.

Step (202) comprises operating the wind turbine or performing a computer-aided simulation of the wind rotor with the one selected wind rotor configuration (10) during a standstill operational condition, for a plurality of different evaluated wind conditions, each evaluated wind condition at a substantially fixed wind direction.

Please note that, in the preferred embodiment of Figure 1 and Figure 2 according to the present invention, evaluated wind condition refers to an evaluated wind speed, however, according to the invention, it may be also associated with a turbulence parameter and/or other conditions as density, upflow and shear, among other. Thus, in some embodiments not represented by the figures, each evaluated wind speed determination must be executed for different evaluated turbulence intensities and/or other evaluated conditions as density, upflow and shear, among other.

Referring now to step (203), the method (200) further comprises obtaining a set of data at one or more wind turbine components (2,3,4,5,6,7) of the wind turbine (10), by either measuring on-site data during operation of (202), in particular from one or more sensors, or data derived from the results of the computer-aided simulation of step (202), each set of data obtained for a plurality of different evaluated wind conditions at an evaluated wind direction, said data associated with a load level and/or vibration response, for example a maximum allowable load level and/or vibrational response at one or more components for a given evaluated wind condition at an evaluated wind direction within the range (ΔD).

According to a preferred embodiment, the vibration responses and/or loading levels are taken from the tower (7), the nacelle (6), the hub (5) and/or from the blades (2,3,4). The maximum vibrational response and/or loading associated to the maximum wind condition at a given range may be that vibration response which accounts to an allowable threshold in any of the tower (7), the nacelle (6), the hub (5), the blades (2,3,4), or any other component, or a weighted allowable value based on one or more vibration responses and/or loads allowable on a plurality of components of the wind turbine.

Step (203) comprises, establishing, based on the set of obtained data, a safety threshold comprising a maximum wind condition for a given wind direction.

Step (204) comprises repeating previous steps, for multiple evaluated wind directions in relation to the rotor plane, this way, a range (ΔD) of wind directions is materialized by the end points of the evaluated wind directions utilized for the computing of previous steps (202,203).

Step (206) involves establishing the absolute maximum wind condition across the entire range (ΔD) of different wind directions, this is, across the selected end points of wind directions.

Note that, depending on the end points, the absolute maximum value of wind condition may change. Thus, a plurality of ranges (ΔD1, ΔD2, ΔD3) could be selected and stored, each associated with an absolute maximum wind condition for a given selected rotor configuration (10).

As a result, step (207) addresses determining absolute maximum values for different wider or narrower ranges (ΔD1, ΔD2, ΔD3).

Step (208) comprises storing these values to be used or retrieved by step (101) of method (100) or by the control system of the wind turbine (1). The stored ranges (ΔD1, ΔD2, ΔD3) may be used to further compared with an expected (ΔED1) or safety range (ΔSD) at step (102) of method (100).

In addition, the method (200) can be repeated with different rotor configurations (10) within the one or more rotor configurations which have proven good results in vibration damping and/or reduced loading level, and the corresponding values stored for the given wind turbine (1), values which may change depending on the wind turbine (1) model.

Each rotor configuration (10), according to the preferred embodiment of the invention, is varied each time within any rotor configurations within the scope of the pitch position and azimuthal boundaries aforementioned for the load level and/or vibration damping, said boundaries being such that the pitch angle (P) of the first rotor blade (2) is set to a pitch angle (P) close to 0°, in particular within -25° and 25°, and a one or more rotor configurations (10) according to the invention.

Please note that, the flowcharts and step diagrams in Figure 1 and 2, illustrate the architecture, functionality, and operation of possible implementations of systems, methods and computer program products according to various embodiments of the present invention. For example, materialized in the control system integrated in the wind turbine of Figure 1. In this regard, each step in the flowchart or step diagrams may represent a module, segment, or portion of code, which comprises one or more executable instructions for implementing the specified logical function(s).

It should also be noted that, in some alternative implementations, the functions noted in the step may occur out of the order noted in the figures. For example, two steps shown in succession may, in fact, he executed substantially concurrently, or the steps may sometimes be executed in the reverse order, depending upon the functionality involved. It will also be noted that each step of the block diagrams and/or flowchart illustration, and combinations of steps in the block diagrams and/or flowchart illustration, can he implement by special purpose hardware-based systems which perform the specified functions or acts, or combinations of special purpose hardware and computer instructions.

Referring back to figure 1, once step (101) is executed by the preferred way of it carrying out as forecited, step (102) comprises a comparison between the first maximum wind condition determined and the on-site wind condition.

The comparison of step (102) may further determine or retrieve an expected range (EΔD) or a safety allowable range (SΔD) of wind directions on a subsequent time domain, for example said time domain associated with the time allocated for a service operation on the wind turbine (1).

Further, step (102) may comprise comparing the expected (EΔD) or safety allowable range (SΔD) to a stored range (ΔD) from a plurality of stored ranges (ΔD1, ΔD2, ΔD3), wherein the selected stored range ((ΔD) comprising substantially the same end points, thus selecting a stored range (ΔD) with substantially the same endpoints, and then comparing the on-site wind condition to the first maximum wind condition stored and associated to said stored range (ΔD). Note that, stored values may be taken from method (200) of Figure 3, in particular from step (208) of method (200).

In addition, for a given stored range (ΔD) selected, there may be a first maximum wind conditions for each single rotor configurations (10) as a result of the multiple repetition of method (200) with different rotor configurations (10) of the one or more selected rotor configurations, thus, the rotor configuration (10) stored which resulted from the higher maximum wind condition value may be the one selected and said value is the one compared with the on-site wind condition.

If the condition of step (102) is satisfied, then it proceeds to step (103) wherein the selected rotor configuration (10) is set, for example, by the control system and corresponding actuators or adjusted manually by personnel.

Optionally, if required, a maintenance or installation operation may be conducted in step (104) at higher wind conditions than typically permissible for safety reasons, achieving load levels and/or vibrations still at allowable safe limits. Downtimes can be reduced, and availability of the wind turbine improved.

If the condition of step (102) is not satisfied, meaning that the on-site wind condition is still higher than the determined first maximum wind condition, and yaw movements are not possible or desired, then still the wind turbine control system may set a selected rotor configuration (10) from the one or more rotor configurations, in order to reduce load levels and/or vibrations on the wind turbine components and hence reduce in particular the fatigue and therefore increase useful life of components, and in general reduce the possibility of putting turbine structural integrity in danger.

For this, step (105) addresses obtaining the maximum equivalent wind condition, namely a second maximum wind condition, for the rotor at the on-site configuration, or a conventional standstill rotor configuration, for example, a rotor configuration with all the blades (2,3,4) fully feathered. For obtaining this second maximum wind condition, the same steps of method (200) may be performed, wherein the selected rotor configuration (10) is selected accordingly within the boundaries given for the one or more rotor configurations (10) which have proven to give good load level reduction and damping results under varying wind direction.

Then, if the condition of step (106) is satisfied, meaning that the load level and/or vibrations would be reduced for an allowable or expected range (EΔD, SΔD)) of wind directions when a yaw movement may not be possible or desired, the rotor is also set to the selected rotor configuration (10) associated with the first maximum wind condition for reducing load level and/or vibrations on components of the wind turbine (10).

The method (200) of Figure 3 may preferably be a computer implemented method or a non-transitory computer-readable storage medium storing instructions that, when executed by one or more processors, cause the processors to perform all or some of the computer operations of Figure 3.

Please note that, advantages and features of each aspect of this invention, for example the methods forecited or a wind turbine incorporating control modules or systems for executing all or some of the steps of the method herein disclosed, can obviously be combined within the meaning of the present invention, unless specifically stated otherwise.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention. Any obvious modifications or variations are intended to be covered by the appended claims. It should also be noted that reference signs in the claims should not be construed as limiting the scope of the claims.

In addition, it should be noted that the use of "a", "an" or "the" throughout this application does not exclude a plurality, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

### CLAUSES

For reasons of completeness, various aspects of the present invention are set out in the following numbered clauses:
Clause 1.- A method (100) for setting a wind turbine (1) during standstill conditions in particular devoid of a yaw movement, the wind turbine (1) being of the type with a wind rotor comprising at least two rotor blades (2,3,4), wherein the method (100) comprises:
   setting one selected rotor configuration (10) selected from one or more rotor configurations (10), wherein each one or more selected rotor configuration (10) involves a predefined pitch positions for each rotor blade (2,3,4) and a predefined azimuthal position of a rotor blade (2,3,4), if
      a first maximum wind condition exceeds an anticipated or current on-site wind condition, said first maximum wind condition obtained or retrieved, for the one or more selected rotor configurations (10), for at least an eval-uated wind direction in respect to the wind rotor, said first maximum wind condition associated with a load level and/or vibration response on one or more components (2,3,4,5,6,7) of the wind turbine (1) for an evaluated wind condition of a plurality of evaluated wind conditions evaluated on at least the evaluated wind direction, in particular evaluated for a plurality of evaluated wind directions, said first maximum wind condition based at least in part on an allowable threshold comprising vibration response and/or load level; and/or
   the first maximum wind condition exceeds a second maximum wind condi-tion, said second maximum wind condition obtained or retrieved, in particular if required, for a different rotor configuration other than the one or more selected rotor configurations (10) and associated with a load level and/or vibration response on one or more components (2,3,4,5,6,7), for an evaluated wind condition of a plurality of evaluated wind conditions evaluated for at least the evaluated wind direction, in particular evaluated for a plurality of evaluated wind directions, said second maximum wind condition based at least in part on the allowable threshold.
Clause 2.- The method (100) of clause 1, wherein the first and second maximum wind conditions are based on the evaluated wind direction such that said evaluated wind direction corresponds substantially to an on-site wind direction, in particular wherein the evaluated wind direction is selected from a plurality of evaluated wind directions, such that it matches the on-site wind direction.
Clause 3.- The method (100) of clause 2, further comprising:
   evaluating the one or more selected rotor configurations (10) by either on-site adjustment or using computer-aided simulations,
   performing one or more on-site or computer-aided measurements on one or more wind turbine components (2,3,4,5,6,7) at a plurality of evaluated wind conditions at a plurality of evaluated wind directions,
   obtaining, based on the measurements, a set of first maximum wind condition for each evaluated wind directions based at least in part on the allowable threshold.
Clause 4.- The method of anyone of previous clauses, further comprising comparing an-on site wind direction with a set of evaluated wind directions associated each to a first maximum wind condition, and further selecting the first maximum wind condition such that the evaluated wind direction matches the on-site wind direction.
Clause 5.- The method (100) of clause 1, wherein the first and second maximum wind condition are each obtained or retrieved, in particular if required, across an entire range (ΔD, ΔD1, ΔD2, ΔD3) of the plurality of evaluated wind directions in respect to the wind rotor, each of said first and second maximum wind conditions associated with a load level and/or vibration response on one or more components (2,3,4,5,6,7) of the wind turbine (10), based on the allowable threshold, for an evaluated wind condition of the plurality of wind evaluated conditions evaluated within the range (ΔD, ΔD1, ΔD2, ΔD3), the first maximum wind condition being associated with the selected rotor configuration (10) and the second maximum wind condition associated with the different rotor con-figuration.
Clause 6.- The method (100) of anyone of the previous clauses, further comprising performing a construction or service operation for the wind tur-bine (1) if the first maximum wind condition exceeds the anticipated or current on-site wind condition, in particular if the first maximum wind condition further exceeds the second maximum wind condition.
Clause 7.- The method (100) of anyone of clauses 5 or 6, further comprising:
   evaluating the one or more selected rotor configurations (10) by either on-site blade adjustments or using computer-aided simulations,
   performing one or more on-site or computer-aided measurements on one or more wind turbine components (2,3,4,5,6,7) at a plurality of evaluated wind conditions at a plurality of evaluated wind directions comprised within a range (ΔD, ΔD1, ΔD2, ΔD3) of evaluated wind directions, each evaluated wind condition evaluated across the range (ΔD, ΔD1, ΔD2, ΔD3) and associated with a load level and/or vibration response on the one or more components (2,3,4,5,6,7),
   obtaining, based on the measurements, the first maximum wind condition across the entire range (ΔD, ΔD1, ΔD2, ΔD3) of evaluated wind directions based at least in part on the allowable threshold on the one or more components.
Clause 8.- The method (100) of anyone of clauses, comprising:
   obtaining the anticipated or current on-site wind condition,
   comparing the on-site wind condition with the first maximum wind condition,
   setting one selected rotor configuration (10) of the one or more selected rotor configurations (10), based on the result of the comparison.
Clause 9.- The method (100) of anyone of the clauses 5 to 8, further comprising:
   obtaining the anticipated or current on-site wind condition and an on-site wind direction,
   obtaining an expected range (EΔD) or a safety allowable range (SΔD) of wind directions on a subsequent time domain, in particular said time domain associated with the time allocated for a construction or service operation on the wind turbine,
   comparing the expected (EΔD) or the safety allowable range (SΔD) to a stored range (ΔD, ΔD1, ΔD2, ΔD3) of evaluated wind directions associated to the maximum first wind condition obtained for said stored range (ΔD),
   comparing the anticipated or current on-site wind condition with the maximum first wind condition of the stored range (ΔD, ΔD1, ΔD2, ΔD3),
   setting the selected rotor configuration (10) based on the results of the comparisons.
Clause 10.- The method (100) of anyone of previous clauses, wherein the different rotor configuration are a group of different rotor configurations other than the one or more selected rotor configurations (10), said different rotor configurations involving any rotor configuration wherein all the blades are set at a substantially feathered pitch positions, in particular wherein all the rotor blades have a pitch angle (P) equal 90° or -90° or is close to 90° or -90°, in particular within a range of 75° to 105° or -105° to -75°.
Clause 11.- The method (100) of clause 10, wherein the one or more selected rotor configurations (10) are any rotor configuration other than the different rotor configurations.
Clause 12.- The method (100) of anyone of previous clauses, wherein the one or more selected rotor configurations (10) are selected from a rotor configuration comprising a pitch angle (P) of a first rotor blade (2) close to 0°, in particular within -25° and 25°, and wherein a one or more further blades (3,4) comprise a pitch angle differing by at least 30° from the first rotor blade (2), in particular by at least 40°, and/or wherein the further blades (3,4) comprise a pitch angle (P) equal to 90° or -90° or close to 90° or -90°, in particular within a range of 75° to 105° or -105° to -75°.
Clause 13.- The method (100) of anyone of previous clauses, wherein the selected rotor configuration wherein the azimuthal position of the first rotor blade (2) is selected such that said first rotor blade is the uppermost rotor blade of the rotor or, in a three-bladed rotor, when two upper rotor blades are level with each other, defining a 'Y' shape, setting either one of said two upper rotor blades as the first rotor blade.
Clause 14.- The method (100) of anyone of previous clauses, wherein the wind condition comprises a wind speed and the maximum wind condition comprises a maximum wind speed, in particular, each further comprising an associated wind turbulence intensity parameter and/or any other condition selected from a list consisting of density, upflow and shear.
Clause 15.- The method (100) of anyone of previous clauses, wherein the load level and/or vibration response are obtained based on tensions, strains, displacements, rotations, accelerations, or any other measurable magnitudes allowing to calculate or estimate loads and vibration levels, detected at one or more blades (2,3,4), at the tower (7), at the nacelle (6), at the hub (5) and/or at any other component such as main shaft, gearbox or electrical generator, or a weighted value based on tensions, strains, displacements, rotations, accelerations, or any other measurable magnitudes allowing to calculate or estimate loads and vibration levels, on a plurality of components.
Clause 16.- The method (100) of anyone of previous clauses, for performing an assembly or construction operation and/or for operating the wind turbine during standstill conditions, in particular devoid of a yaw movement during said standstill conditions.
Clause 17.- A wind turbine (1), comprising: at least two rotor blades (2,3,4), said blades (2,3,4) attached to a hub (5), forming a wind rotor mounted to a nacelle (6) which is in turn mounted on a tower (7), further comprising an electrical generator operation-ally connected to the wind rotor for converting wind energy into electrical energy, the wind turbine (10) comprising pitch-position adjustment units for adjusting the blade pitch position, and a rotational mechanism for rotating the rotor blades, each position able to be adjusted manually, said wind turbine (1) being **characterized in that:**
   the rotor blades (2,3,4) are configured to be adjusted to one selected rotor configuration (10) of a one or more selected rotor configurations (10), by actuating on or adjusting the pith-position adjustment units and rotating the wind rotor such that it matches the one selected rotor configuration (10), if a first maximum wind condition is above an anticipated or current on-site wind condition and/or if said first maximum wind condition is above a second maximum wind condition,
   wherein the first maximum wind condition is obtained or retrieved, for the one or more selected rotor configurations (10), for at least an evaluated wind direction in respect to the wind rotor, said maximum wind condition associated with a load level and/or vibration response on one or more components of the wind turbine for an evaluated wind condition for a plurality of evaluated wind conditions evaluated for at least the evaluated wind direction, in particular for a plurality of evaluated wind directions, said first maximum wind condition based at least in part on an allowable threshold comprising vibration response and/or load level, and
   the second maximum wind condition, in particular if required, is obtained or retrieved for a different rotor configuration other than the one or more selected rotor configurations (10) and is associated with a load level and/or a vibration response on one or more components of the wind turbine for an evaluated wind condition evaluated in the at least the evaluated wind direction, in particular for the plurality of evaluated wind directions, said second maximum wind condition based at least in part on the allowable threshold.
Clause 18.- The wind turbine of clause 17, wherein the first and second maximum wind condition are evaluated exclusively at the wind direction such that said wind direction corresponds substantially to an on-site wind direction, in particular to an on-site prevailing wind direction defined as the one of the prevailing wind directions for the site whereat the wind turbine is mounted, the first maximum wind condition associated with the one selected rotor configuration, and the second maximum wind condition associated to a different rotor configuration other than the one or more selected rotor configurations (10).
Clause 19.- The wind turbine of clause 17, wherein the first and second maximum wind condition are each obtained or retrieved, in particular if required, across an entire range (ΔD, ΔD1, ΔD2, ΔD3) of a plurality of wind directions in respect to the wind rotor, each of said first and second maximum wind conditions associated with a load level and/or vibration response on one or more components (2,3,4,5,6,7) of the wind turbine (10) based on an allowable threshold, for a wind condition of the plurality of wind conditions evaluated with-in the range (ΔD, ΔD1, ΔD2, ΔD3), the first maximum wind condition being associated with the selected rotor configuration (10) and the second maximum wind condition associated with the different rotor configuration.
Clause 20.- The wind turbine (1) of clause 17 to 19, wherein the selected rotor configuration (10) is set up such that the pitch angle (P) of a first rotor blade (2) is set to a pitch angle within -25° and 25°, and a one or more further blades (3,4) are each set to a pitch angle (P) differing by at least 30° from the first rotor blade (2), and preferably wherein the selected rotor configuration (3,4) further comprises setting the azimuthal position of the first rotor blade (2) such that said first rotor blade (2) is the uppermost rotor blade of the rotor or, in a three-bladed rotor, when the two upper rotor blades (2,3,4) are at substantially the same height, either one of said two upper rotor blades (2,3,4) is set as the first rotor blade (2).
Clause 21.- The wind turbine (1) of anyone of claims 17 to 20, wherein the rotor configurations different than the one or more selected rotor configuration, comprises at least a rotor configuration with all the blades set up at a substantially feathered pitch positions, in particular wherein all the rotor blades equal a pitch angle (P) of 90° or -90° or close to 90° or -90°, in particular within a range of 75° to 105° or -105° to -75°.
Clause 22.- A wind farm comprising a plurality of wind turbines (1) according to any one of the clauses 17 to 21.
Clause 23.- A computer implemented method (200), comprising:
   obtaining from computer-aided simulations or retrieving from on-site measurements, a set of data associated with a load level and/or vibration response at one or more components of the wind turbine, said set of data obtained for a plurality of evaluated wind conditions for at least an evaluated wind direction for one or more selected rotor configurations (10),
   determining, based on the obtained data, a first maximum wind condition comprising the wind condition of the plurality of evaluated wind conditions associated to an allowable threshold comprising a load level and/or a vibration response on one or more components of the wind turbine, for at least the evaluated wind direction evaluated for the one or more selected rotor configurations (10).
Clause 24.- The method (200) of clause 23, wherein the data is obtained for a plurality of evaluated wind conditions at a plurality of evaluated wind directions, said plurality of evaluated wind directions comprised within a range (ΔD, ΔD1, ΔD2, ΔD3) of wind directions, each range (ΔD, ΔD1, ΔD2, ΔD3) associated with a first maximum wind direction for one or more selected rotor configurations (10) across the entire range (ΔD, ΔD1, ΔD2, ΔD3).
Clause 25.- The method (200) of clause 23, wherein the data is obtained for plurality of evaluated wind directions, obtaining a set of first maximum wind conditions wherein each of the first maximum wind conditions associated to an evaluated wind direction, in particular further storing each first maximum wind condition associated with the evaluated wind direction.
Clause 26.- The method (200) of anyone of clauses 23 to 25, further comprising:
   storing, a plurality of ranges (ΔD, ΔD1, ΔD2, ΔD3) of evaluated wind diretions, each range (ΔD, ΔD1, ΔD2, ΔD3) associated with a corresponding first maximum wind condition for each of the one or more selected wind turbine configurations (10), and/or
   storing, a set of first maximum wind conditions, each associated to an evaluated wind direction, for each of the one or more selected wind turbine configurations (10).
Clause 27.- The method (200) of anyone of clauses 23 to 26, further comprising:
   repeating previous steps for a plurality of rotor configurations selected from the one or more selected rotor configurations (10),
   storing, for each selected rotor configuration (10), the data collected associated with a first maximum wind condition at one or more ranges (ΔD, ΔD1, ΔD2, ΔD3) of evaluated wind directions and/or with a set of first maximum wind conditions at a plurality of evaluated wind directions.
Clause 28.- The method (200) of anyone of clauses 23 to 27, wherein each selected rotor configuration (10) is set by inputting pitch angles (P) and azimuthal position on the computer-aided simulation or by on-site adjustment, and each selected rotor configuration is selected such that the pitch angle (P) of a first rotor blade (2) is set to a pitch angle within -25° and 25°, and a one or more further blades (3,4) are each set to a pitch angle (P) differing by at least 30° from the first rotor blade (2), and in particular wherein the selected rotor configuration (10) further comprises setting the azimuthal position of the first rotor blade (2) such that said first rotor blade (2) is the uppermost rotor blade of the rotor or, in a three-bladed rotor, when the two upper rotor blades (2,3,4) are at substantially the same height, either one of said two upper rotor blades (2,3,4) is set as the first rotor blade (2).
Clauses 29.- The method of anyone of clauses 23 to 28,
   obtaining from computer-aided simulations or retrieving from on-site measurements, a set of data associated with a load level and/or a vibration response at one or more components of the wind turbine determined based at least in part on an allowable threshold, said set of data obtained for a plurality of wind conditions for at least the wind direction for a different rotor configuration other than the one or more selected rotor configurations (10),
   determining, based on the obtained data, a second maximum wind condition comprising the wind condition associated to an allowable load level and/or vibration response threshold on one or more components of the wind turbine for the at least the wind direction.
Clause 30.- A non-transitory computer-readable storage medium storing instructions that, when executed by one or more processors, cause the processors to perform the operations of anyone of clauses 23 to 29.
Clause 31.- A non-transitory computer-readable storage medium storing instructions that, when executed by one or more processors, cause the processors to perform the operations of clause 1, in particular to anyone of clauses 1 to 16.
Clause 32.- A non-transitory computer-readable storage medium, configured to store:
   one or more ranges (ΔD, ΔD1, ΔD2, ΔD3), each one or more ranges (ΔD, ΔD1, ΔD2, ΔD3) stored with an associated first maximum wind condition for one or more selected rotors configurations (10), in particular further storing the second maximum wind condition for the one or more ranges (ΔD, ΔD1, ΔD2, ΔD3) according to anyone of claims 23 to 29, and/or
   a plurality of first maximum wind condition for a plurality of evaluated wind direction, each first maximum wind condition associated to a corresponding evaluated wind direction and determined based on the evaluated wind condition associated to an allowable load level and/or vibration response threshold on one or more components from a plurality of evaluated wind condition evaluated at each corresponding evaluated wind direction according to anyone of clauses 23, 25 or 26.
Clause 33.- The storage medium of clause 32, further configured to store a most favorable rotor configuration of the one or more selected rotor configurations (10) stored, in particular said most favorable rotor configuration associated to the higher first maximum wind condition determined out of all of the one or more rotor configurations stored at either each range (ΔD, ΔD1, ΔD2, ΔD3) or selected for each evaluated wind direction.
Clause 34.- A wind turbine (1), comprising: at least two rotor blades (2,3,4), said blades (2,3,4) attached to a hub (5), forming a wind rotor mounted to a nacelle (6) which is in turn mounted on a tower (7), further comprising an electrical generator operationally connected to the wind rotor for converting wind energy into electrical energy, the wind turbine (10) being characterized in that it further comprises a control unit, external or integrated with a main control system of the wind turbine, said control unit configured to:
   set one selected rotor configuration (10) of one or more selected rotor configurations (10), if a first maximum wind condition exceeds an on-site wind condition and/or if said first maximum wind condition exceeds a second maximum wind condition associated to a different rotor configuration other than the one or more selected rotor configurations (10), wherein the first and the second maximum wind condition are each a maximum wind condition determined across an entire range (ΔD) of evaluated wind directions in respect to the rotor, said maximum wind condition associated with a load level and/or vibration response on one or more components (2,3,4,5,6,7) of the wind turbine at a plurality of evaluated wind conditions within said range (ΔD), the first maximum wind condition associated with the one selected rotor configuration, and the second maximum wind condition associated to a different rotor configuration other than the one or more selected rotor configurations (10).
Clause 35.- A wind turbine (1), comprising: at least two rotor blades (2,3,4), said blades (2,3,4) attached to a hub (5), forming a wind rotor mounted to a nacelle (6) which is in turn mounted on a tower (7), further comprising an electrical generator operationally connected to the wind rotor for converting wind energy into electrical energy, the wind turbine (10) being characterized in that it further comprises a control unit, integrated or external to a main control system, configured to obtain, retrieve or to be manually inputted:
   a first maximum wind condition which is based on a maximum wind condition determined across an entire range (ΔD) of evaluated wind directions in respect to the rotor, said maximum wind condition associated with a load level and/or vibration response on one or more components (2,3,4,5,6,7) of the wind turbine at evaluated wind conditions within said range (ΔD), for one or more selected rotor configuration (10); and further configured to:
   send or receive instructions, for setting one selected rotor configuration (10) of the one or more selected rotor configurations (10), if the first maximum wind condition is above an on-site wind condition and/or if said first maximum wind condition is above a second maximum wind condition associated to a different rotor configuration other than the one or more selected rotor configurations (10) .
Clause 36.- Arrangement for setting a selected rotor configuration of a wind turbine during standstill conditions, the arrangement comprising a manual pitch adjustment kit comprising one or more tools selected from a list consisting of: wrenches, spanners, lifting equipment, alignment equipment, drills, jacks, gauges, pliers, pulleys, calipers, manual pitch-setting tools specifically designed for wind turbine specific pitching mechanism,
   wherein the arrangement is configured to set a selected rotor configuration according to the method of anyone of clauses 1 to 16.

## Claims

1. A method (100) for setting a wind turbine (1) during standstill conditions in particular devoid of a yaw movement, the wind turbine (1) being of the type with a wind rotor comprising at least two rotor blades (2,3,4), wherein the method (100) comprises:
setting one selected rotor configuration (10) selected from one or more rotor configurations (10), wherein each one or more rotor configuration (10) involves a predefined pitch positions for each rotor blade (2,3,4) and in particular a predefined azimuthal positions of a rotor blade (2,3,4), if
a first maximum wind condition exceeds an anticipated or current on-site wind condition, said first maximum wind condition obtained or retrieved, for the one or more selected rotor configurations (10), for at least an evaluated wind direction in respect to the wind rotor, said first maximum wind condition associated with a load level and/or vibration response on one or more components (2,3,4,5,6,7) of the wind turbine (1) for an evaluated wind condition of a plurality of evaluated wind conditions evaluated on at least the evaluated wind direction, in particular evaluated for a plurality of evaluated wind directions, said first maximum wind condition based at least in part on an allowable threshold comprising a vibration response and/or a load level; and/or
the first maximum wind condition exceeds a second maximum wind condition, said second maximum wind condition obtained or retrieved, in particular if required, for a different rotor configuration other than the one or more selected rotor configurations (10) and associated with a load level and/or vibration response on one or more components (2,3,4,5,6,7), for an evaluated wind condition of a plurality of evaluated wind conditions evaluated for at least the evaluated wind direction, in particular evaluated for a plurality of evaluated wind directions, said second maximum wind condition based at least in part on the allowable threshold.

2. The method (100) of claim 1, wherein the first and second maximum wind conditions are based on the evaluated wind direction such that said evaluated wind direction corresponds substantially to an on-site wind direction, in particular wherein the evaluated wind direction is selected from a plurality of evaluated wind directions, such that it matches the on-site wind direction.

3. The method (100) of claim 1, wherein the first and second maximum wind condition are each obtained or retrieved, in particular if required, across an entire range (ΔD, ΔD1, ΔD2, ΔD3) of the plurality of evaluated wind directions in respect to the wind rotor, each of said first and second maximum wind conditions associated with a load level and/or vibration response on one or more components (2,3,4,5,6,7) of the wind turbine (10), based on the allowable threshold, for an evaluated wind condition of the plurality of wind evaluated conditions evaluated within the range (ΔD, ΔD1, ΔD2, ΔD3), the first maximum wind condition being associated with the selected rotor configuration (10) and the second maximum wind condition associated with the different rotor configuration.

4. The method (100) of anyone of claims 1 to 3, further comprising performing a construction or service operation for the wind turbine (1) if the first maximum wind condition exceeds the anticipated or current on-site wind condition, in particular if the first maximum wind condition further exceeds the second maximum wind condition.

5. The method (100) of anyone of claims 2 to 4, further comprising:
evaluating the one or more selected rotor configurations (10) by either on-site blade adjustments or using computer-aided simulations,
performing one or more on-site or computer-aided measurements on one or more wind turbine components (2,3,4,5,6,7) at a plurality of evaluated wind conditions at a plurality of evaluated wind directions comprised within a range (ΔD, ΔD1, ΔD2, ΔD3) of evaluated wind directions, each evaluated wind condition evaluated across the range (ΔD, ΔD1, ΔD2, ΔD3) and associated with a load level and/or vibration response on the one or more components (2,3,4,5,6,7),
obtaining, based on the measurements, the first maximum wind condition across the entire range (ΔD, ΔD1, ΔD2, ΔD3) of evaluated wind directions based at least in part on the allowable threshold on the one or more components.

6. The method (100) of anyone of claims 1 to 5, comprising:
obtaining the anticipated or current on-site wind condition,
comparing the on-site wind condition with the first maximum wind condition,
setting one selected rotor configuration (10) of the one or more selected rotor configurations (10), based on the result of the comparison.

7. The method (100) of anyone of claims 2 to 6, further comprising:
obtaining the anticipated or current on-site wind condition and an on-site wind direction,
obtaining an expected range (EΔD) or a safety allowable range (SΔD) of wind directions on a subsequent time domain, in particular said time domain associated with the time allocated for a construction or service operation on the wind turbine,
comparing the expected (EΔD) or the safety allowable range (SΔD) to a stored range (ΔD, ΔD1, ΔD2, ΔD3) of evaluated wind directions associated to the maximum first wind condition obtained for said stored range (ΔD),
comparing the anticipated or current on-site wind condition with the maximum first wind condition of the stored range (ΔD, ΔD1, ΔD2, ΔD3),
setting the selected rotor configuration (10) based on the results of the comparisons.

8. The method (100) of anyone of claims 1 to 7, wherein the one or more selected rotor configurations (10) are selected from a rotor configuration comprising a pitch angle (P) of a first rotor blade (2) close to 0°, in particular within -25° and 25°, and wherein a one or more further blades (3,4) comprise a pitch angle differing by at least 30° from the first rotor blade (2), in particular by at least 40°, and/or wherein the further blades (3,4) comprise a pitch angle (P) equal to 90° or -90° or close to 90° or -90°, in particular within a range of 75° to 105° or -105° to -75°.

9. The method (100) of anyone of claims 1 to 8, wherein the one or more selected rotor configurations (10) are selected from a rotor configuration further comprising an azimuthal position of the first rotor blade (2) such that said first rotor blade is the uppermost rotor blade of the rotor or, in a three-bladed rotor, if the two upper rotor blades are level with each other, defining a 'Y' shape, either one of said two upper rotor blades is the first rotor blade (2).

10. The method (100) of anyone of claims 1 to 9, wherein the different rotor configuration other than the selected rotor configuration (10), is selected from a rotor configuration wherein all the blades are set at a substantially feathered pitch positions, in particular wherein all the rotor blades have a pitch angle (P) equal 90° or -90° or is close to 90° or -90°, in particular within a range of 75° to 105° or -105° to -75°.

11. A wind turbine (1), comprising: at least two rotor blades (2,3,4), said blades (2,3,4) attached to a hub (5), forming a wind rotor mounted to a nacelle (6) which is in turn mounted on a tower (7), further comprising an electrical generator operation-ally connected to the wind rotor for converting wind energy into electrical energy, the wind turbine (10) comprising pitch-position adjustment units for adjusting the blade pitch position, and a rotational mechanism for rotating the rotor blades, each position able to be adjusted manually, said wind turbine (1) being **characterized in that:**
the rotor blades (2,3,4) are configured to be adjusted to one selected rotor configuration (10) of a one or more selected rotor configurations (10), by actuating on or adjusting the pith-position adjustment units and rotating the wind rotor such that it matches the one selected rotor configuration (10), if a first maximum wind condition is above an anticipated or current on-site wind condition and/or if said first maximum wind condition is above a second maximum wind condition,
wherein the first maximum wind condition is obtained or retrieved, for the one or more selected rotor configurations (10), for at least an evaluated wind direction in respect to the wind rotor, said maximum wind condition associated with a load level and/or vibration response on one or more components of the wind turbine for an evaluated wind condition for a plurality of evaluated wind conditions evaluated for at least the evaluated wind direction, in particular for a plurality of evaluated wind directions, said first maximum wind condition based at least in part on an allowable threshold comprising vibration response and/or load level, and
the second maximum wind condition, in particular if required, is obtained or retrieved for a different rotor configuration other than the one or more selected rotor configurations (10) and is associated with a load level and/or a vibration response on one or more components of the wind turbine for an evaluated wind condition evaluated in the at least the evaluated wind direction, in particular for the plurality of evaluated wind directions, said second maximum wind condition based at least in part on the allowable threshold.

12. A computer-implemented method (200), comprising:
obtaining from computer-aided simulations or retrieving from on-site measurements, a set of data associated with a load level and/or vibration response at one or more components of the wind turbine, said set of data obtained for a plurality of evaluated wind conditions for at least an evaluated wind direction for one or more selected rotor configurations (10),
determining, based on the obtained data, a first maximum wind condition comprising the wind condition of the plurality of evaluated wind conditions associated to an allowable threshold comprising a load level and/or a vibration response on one or more components of the wind turbine, for at least the evaluated wind direction evaluated for the one or more selected rotor configurations (10).

13. The method (200) of claim 12, wherein the data is obtained for a plurality of evaluated wind conditions at a plurality of evaluated wind directions, said plurality of evaluated wind directions comprised within a range (ΔD, ΔD1, ΔD2, ΔD3) of wind directions, each range (ΔD, ΔD1, ΔD2, ΔD3) associated with a first maximum wind direction for one or more selected rotor configurations (10) across the entire range (ΔD, ΔD1, ΔD2, ΔD3).

14. The method (200) of claim 12 or 13, further comprising:
storing, a plurality of ranges (ΔD, ΔD1, ΔD2, ΔD3) of evaluated wind directions, each range (ΔD, ΔD1, ΔD2, ΔD3) associated with a corresponding first maximum wind condition for each of the one or more selected wind turbine configurations (10), and/or
storing, a set of first maximum wind conditions, each associated to an evaluated wind direction, for each of the one or more selected wind turbine configurations (10).

15. The method (200) of anyone of claims 12 to 14, further comprising:
repeating previous steps for a plurality of rotor configurations selected from the one or more selected rotor configurations (10),
storing, for each selected rotor configuration (10), the data collected associated with a first maximum wind condition at one or more ranges (ΔD, ΔD1, ΔD2, ΔD3) of evaluated wind directions and/or with a set of first maximum wind conditions at a plurality of evaluated wind directions.
